# EUROPEAN PATENT APPLICATION

(11) **EP 4 804 308 A1**
(43) Date of publication of application: **09.09.2026**
(21) Application number: 24885452.3
(22) Date of filing: 16.10.2024
(51) Int. Cl.: H01M 50/184, H01M 10/04, H01M 10/0587, H01M 50/152, H01M 50/167

(54) **HERMETICALLY SEALED BATTERY**

(30) Priority: 31.10.2023 JP 2023186276
(71) Applicant: Panasonic Intellectual Property Management Co., Ltd., Kadoma-shi, Osaka 571-0057 (JP)
(72) Inventor: YAMASHITA, Shuichi, Osaka 571-0057 (JP); FUKUOKA, Takahiro, Osaka 571-0057 (JP); SUZUKI, Kana, Osaka 571-0057 (JP)
(74) Representative: Eisenführ Speiser
(86) International application number: PCT/JP2024/036892
(87) International publication number: WO 2025/094678

(57) **Abstract**

This hermetically sealed battery includes an electrode body, an exterior can (16), a sealing body, and a gasket (28) interposed between the exterior can and the sealing body. The sealing body is swaged and fixed to the opening-side end of the exterior can via the gasket. The gasket has a cylindrical body part (50) and a protrusion (54) protruding over the entire circumference from the outer peripheral surface of the body part to the outside in the radial direction. The protrusion is elastically bent outward in the axial direction so that the tip approaches the outer peripheral surface of the body part in a state in which the inner peripheral surface of a cylindrical part provided at the opening-side end part of the exterior can is pressed toward the outside in the radial direction.

## Description

### TECHNICAL FIELD

The present disclosure relates to a sealed battery, and particularly to a configuration for achieving both enhancement of an ability of removing an electrolytic solution from an inner surface of an opening side end portion of a housing can and enhancement of insertability of a gasket into the housing can in a configuration in which a sealing assembly is crimped and fixed to the opening side end portion of the housing can via the gasket.

### BACKGROUND ART

In the related art, a configuration of a sealed battery including an electrode assembly, a housing can with a bottomed cylindrical shape for accommodating the electrode assembly, and a sealing assembly that blocks an opening of the housing can is known. In such a sealed battery, an electrolytic solution may be poured before the sealing assembly is attached to the housing can. However, if adhesion of the electrolytic solution remains on an inner surface of an opening side end portion of the housing can after the electrolytic solution is poured, then the electrolytic solution adhering to the housing can may cause corrosion of the housing can or may cause seeping-out of the electrolytic solution through the housing can.

Patent Literature 1 describes a sealed battery in which a sealing assembly is crimped and fixed to an opening side end portion of a housing can via a gasket made of a resin having an insulation property. In the configuration described in Patent Literature 1, a mountain-shaped protruding portion with a trapezoidal section projecting outward in the radial direction is formed on the outer circumferential surface of the gasket, and the protruding portion abuts on the inner circumferential surface of the opening side end portion of the housing can in the sealed battery. When the sealing assembly is inserted into the opening side end portion of the housing can along with the gasket in a state where the opening side end portion extends in the axial direction, the protruding portion of the gasket abuts on the inner circumferential surface of the opening side end portion, and an electrolytic solution adhering to the inner circumferential surface is scraped off by the protruding portion.

### CITATION LIST

### PATENT LITERATURE

PATENT LITERATURE 1: International Publication No. WO 2021/200439

### SUMMARY

### TECHNICAL PROBLEM

According to the configuration described in Patent Literature 1, it may be possible to reduce the electrolytic solution that remains on the opening side end portion of the housing can by scraping off the electrolytic solution adhering to and remaining on the inner surface of the opening side end portion of the housing can by the protruding portion of the gasket when the gasket is inserted into the housing can. However, if the outer diameter of the protruding portion is set to be much larger than the inner diameter of the opening side end portion of the housing can in the gasket described in Patent Literature 1 in order to increase the amount of electrolytic solution to be scraped off, the protruding portion requires to be compressed in the radial direction with a large force when the gasket is inserted into the opening side end portion. Therefore, there is room for improvement in terms of enhancement of insertability of the gasket into the can. On the other hand, in a case where the outer diameter of the protruding portion of the gasket is caused to substantially coincide with the inner diameter of the opening side end portion of the housing can for better insertability into the can, it becomes difficult to increase the amount of electrolytic solution to be scraped off, and there is thus room for improvement in terms of enhancement of an ability of removing the electrolytic solution from the inner surface of the housing can.

Thus, it is an advantage of the present disclosure to provide a sealed battery capable of achieving both enhancement of an ability of removing an electrolytic solution from an inner surface of an opening side end portion of a housing can and enhancement of insertability of a gasket into the housing can in a configuration in which a sealing assembly is crimped and fixed to the opening side end portion of the housing can via the gasket.

A sealed battery according to the present disclosure is a sealed battery, comprising: an electrode assembly in which a positive electrode and a negative electrode are wound via separators; a housing can with a bottomed cylindrical shape that accommodates the electrode assembly and an electrolytic solution; a sealing assembly that blocks an opening of the housing can; and an annular gasket that is interposed between the housing can and the sealing assembly, wherein the sealing assembly is crimped and fixed to an opening side end portion of the housing can via the gasket, the gasket includes a tubular main body portion and a protruding portion that projects outward in a radial direction over an entire periphery from an outer circumferential surface of the main body portion, and the protruding portion is elastically folded outward in an axial direction such that a distal end approaches the outer circumferential surface of the main body portion in a state where the protruding portion biases an inner circumferential surface of a tubular portion provided at the opening side end portion of the housing can outward in the radial direction.

According to the sealed battery of the present disclosure, it is possible to secure a force to bias the protruding portion toward the inner circumferential surface of the opening side end portion of the housing can and to improve insertability of the gasket into the housing can by elastically folding the protruding portion outward in the axial direction when the gasket is inserted into the housing can. It is thus possible to achieve both enhancement of an ability of removing the electrolytic solution from the inner surface of the opening side end portion of the housing can and enhancement of insertability of the gasket into the housing can.

### BRIEF DESCRIPTION OF DRAWINGS

FIG. 1 is an axial sectional view of a sealed battery according to an embodiment of the present disclosure.
FIG. 2 is an enlarged view of a portion A in FIG. 1.
FIG. 3 is a sectional view of a gasket before insertion into a housing can in the embodiment.
FIG. 4 is a view illustrating a process of inserting the gasket into the housing can in the embodiment.
FIG. 5 is a main part sectional view illustrating an initial state when the gasket is inserted into the housing can in the embodiment.
FIG. 6 is a view of a sealed battery in a comparative example corresponding to FIG. 4(a).
FIG. 7 is a view of another example of the embodiment corresponding to FIG. 2.
FIG. 8 is a view of another example of the embodiment corresponding to FIG. 5.

### DESCRIPTION OF EMBODIMENTS

Hereinafter, an embodiment of a sealed battery according to the present disclosure will be described in detail with reference to the drawings. Note that the sealed battery of the present disclosure may be a primary battery or may be a secondary battery. Also, the sealed battery of the present disclosure may be a battery using an aqueous electrolytic solution or may be a battery using a non-aqueous electrolytic solution. Hereinafter, a secondary battery (lithium ion battery) using a non-aqueous electrolytic solution will be exemplified as a sealed battery in an embodiment.

Constructing new embodiments by appropriately combining characteristic parts of an embodiment and modifications described below is assumed from the beginning. In the following embodiment, the same configurations will be denoted by the same reference signs in the drawings, and repeated description will be omitted. Also, the plurality of drawings include schematic views, and dimensional ratios, such as lengths, widths, heights, and the like of each member in different drawings are not necessarily consistent. Moreover, components that are not described in the independent claim indicating the highest level concept among components described below are optional components and are not essential components. Furthermore, the present disclosure is not limited to the following embodiment and modifications thereof, and various improvements and changes can be made within the scope of the matters described in the claims of the present application and the scope equivalent thereto.

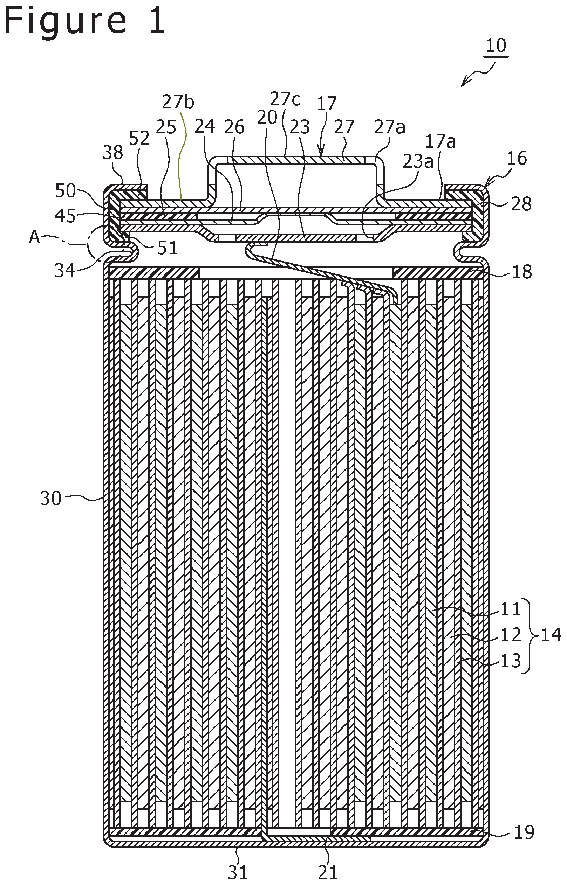

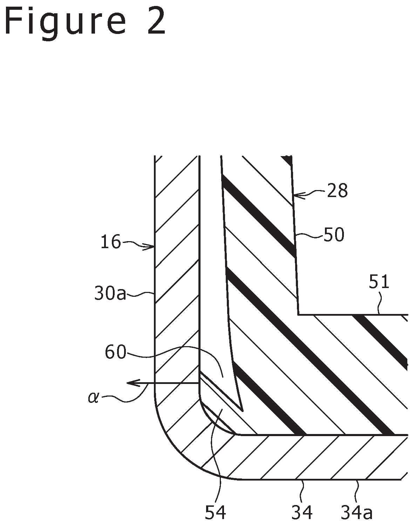

FIG. 1 is an axial sectional view of a sealed battery 10 in an exemplary embodiment. FIG. 2 is an enlarged view of a portion A in FIG. 1. As illustrated in FIG. 1, the sealed battery 10 comprises an electrode assembly 14 that includes a positive electrode 11, a negative electrode 12, and separators 13 with the positive electrode 11 and the negative electrode 12 wound via the separators 13. Also, the sealed battery 10 comprises a housing can 16 with a bottomed cylindrical shape that accommodates the electrode assembly 14 and a sealing assembly 17 that blocks an opening of the housing can 16. A non-aqueous electrolytic solution is accommodated along with the electrode assembly 14 in the housing can 16.

The housing can 16 is a metal container with a bottomed cylindrical shape and has a tubular portion 30 and a bottom 31 provided at an end on one side of the tubular portion 30 in the axial direction. The housing can 16 has a grooved portion 34 that is formed on the other end side in the axial direction, which is an opening end side, of the tubular portion 30 as will be described later, and the sealing assembly 17 is supported by the grooved portion 34 and blocks the opening of the housing can 16. Hereinafter, the sealing assembly 17 side of the sealed battery 10 will be defined as an upper side, and the bottom 31 side of the housing can 16 will be defined as a lower side for convenience of explanation.

The non-aqueous electrolytic solution has ion conductivity (for example, lithium ion conductivity). The non-aqueous electrolytic solution includes a non-aqueous solvent and an electrolyte salt dissolved in the non-aqueous solvent. The sealed battery 10 is preferably a lithium ion battery. Examples of the electrolyte salt used include lithium salts such as LiBF₄ and LiPF₆. Examples of the non-aqueous solvent used include esters such as ethylene carbonate (EC), propylene carbonate (PC), dimethyl carbonate (DMC), ethyl methyl carbonate (EMC), diethyl carbonate (DEC), and methyl propionate (MP), ethers, nitriles, amides, and mixed solvents of two or more kinds of these. The non-aqueous solvent may contain a halogen-substituted product obtained by substituting at least a part of hydrogen in these solvents with a halogen atom such as fluorine.

Examples of the halogen-substituted product include fluorinated cyclic carbonate such as fluoroethylene carbonate (FEC), fluorinated chain carboxylic acid esters such as fluorinated chain carbonate and methyl fluoropropionate (FMP). From the viewpoint of suppressing degradation of charging/discharging cycle properties of the sealed battery, enhancement of input properties, and the like, the non-aqueous electrolytic solution preferably includes 5% by mass or more of FEC and more preferably includes 5% by mass to 15% by mass of FEC with respect to the mass of the non-aqueous electrolytic solution.

The electrode assembly 14 has a wound structure in which the positive electrode 11 and the negative electrode 12 are wound in a spiral shape via the separators 13 as described above. All of the positive electrode 11, the negative electrode 12, and the separators 13 are strip-shaped elongated element and are alternately stacked in the radial direction of the electrode assembly 14 by being wound in a spiral shape. In order to prevent lithium precipitation, the negative electrode 12 is formed to have a slightly larger dimension than the positive electrode 11. In other words, the negative electrode 12 is formed to be longer than the positive electrode 11 in the long-side direction and the short-side direction. The separators 13 are formed to have a slightly larger dimension at least than the positive electrode 11, and for example, two separators 13 are disposed to sandwich the positive electrode 11.

A positive electrode tab 20 and a negative electrode tab 21 are connected to the electrode assembly 14. The positive electrode tab 20 electrically connects the positive electrode 11 to the sealing assembly 17. The positive electrode tab 20 is provided at the center portion of the positive electrode 11 in the long-side direction, which is a position separated from a winding start-side end and a winding end-side end of the electrode assembly 14.

The negative electrode tab 21 is joined to a core exposed portion provided at the winding start-side end portion which is one end portion of the negative electrode 12 in the long-side direction located on the winding start side of the negative electrode 12. In the example illustrated in FIG. 1, the positive electrode tab 20 extends on the sealing assembly 17 side through an opening portion of an upper insulating plate 18 and is joined to a lower surface of the sealing assembly 17, and the sealing assembly 17 serves as a positive electrode terminal. The negative electrode tab 21 passes through a through-hole of an annular lower insulating plate 19, is bent to follow an inner surface of the bottom 31 of the housing can 16, and is connected to a bottom inner surface of the housing can 16 through welding or the like, and the housing can 16 serves as a negative electrode terminal.

The negative electrode 12 is disposed on the outermost circumferential surface of the electrode assembly 14, and a part where a surface of a negative electrode core which constitutes the negative electrode 12 as will be described later is exposed abuts on an inner circumferential surface of the housing can 16. In this manner, both end portions of the negative electrode 12 in the long-side direction and the housing can 16 are electrically connected, and a satisfactory current collectability can be secured.

The positive electrode 11 has a positive electrode core and positive electrode mixture layers formed on both surfaces of the core. For the positive electrode core, a metal foil that is stable within a potential range of the positive electrode 11 such as aluminum or an aluminum alloy, a film with such metal disposed on a surface layer, or the like can be used. The positive electrode mixture layers include a positive electrode active material, a conductive agent such as acetylene black, and a binder such as polyvinylidene fluoride (PVdF) and are preferably formed on both surfaces of the positive electrode core. The thickness of each positive electrode mixture layer is, for example, greater than or equal to 40 µm and smaller than and equal to 100 µm. As the positive electrode active material, a lithium transition metal composite oxide containing, for example, Ni, Co, Mn, or Al is used. Note that the positive electrode tab 20 is preferably joined directly to the positive electrode core through ultrasonic welding or the like.

The negative electrode 12 has a negative electrode core and negative electrode mixture layers formed on both surfaces of the negative electrode core. For the negative electrode core, a metal foil that is stable within a potential range of the negative electrode 12 such as copper or a copper alloy, a film with such metal disposed on a surface layer, or the like can be used. The negative electrode mixture layers include a negative electrode active material and a binder such as styrene-butadiene rubber (SBR). The thickness of each negative electrode mixture layer is, for example, greater than or equal to 40 µm and smaller than and equal to 100 µm. As the negative electrode active material, graphite or an Si-containing material, for example, is used. The negative electrode tab 21 is preferably joined directly to the negative electrode core through ultrasonic welding or the like.

An annular gasket 28 is interposed between the housing can 16 and the sealing assembly 17. The sealing assembly 17 is crimped and fixed to an upper end portion, which is an opening side end portion, of the housing can 16 via the gasket 28. Specifically, the upper end portion of the housing can 16 is crimped to a peripheral edge portion of the sealing assembly 17 via the gasket 28 by a radially bent portion 38 bent inward in the radial direction being formed over the entire periphery of the upper end portion of the housing can 16. In this manner, the inside of the battery is tightly closed.

Furthermore, the housing can 16 has a grooved portion 34 that is formed by pressing a side surface portion from the outside, for example, and supports the sealing assembly 17. The grooved portion 34 is preferably formed in an annular shape along the circumferential direction of the housing can 16, and an upper surface of the grooved portion 34 supports the sealing assembly 17.

The sealing assembly 17 has a structure in which an internal terminal board 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and members expect for the insulating member 25 are electrically connected to each other. The cap 27 has a hat shape that has an annular flange 27b on the outer peripheral side and includes a tubular portion 27c provided at the center portion with an upper end thereof blocked. The internal terminal board 23 has a plurality of opening portions 23a penetrating therethrough in the up-down direction. The lower vent member 24 and the upper vent member 26 are connected to each other at their center portions, and the insulating member 25 is interposed between the peripheral edge portions thereof. The flange 27b of the cap 27 and parts of the members of the sealing assembly 17 except for the cap 27 superimposed on the flange 27b in the axial direction form a flange portion 17a of the sealing assembly 17. The flange portion 17a is an annular part provided on the outer peripheral side of the sealing assembly 17.

If the inner pressure of the battery rises, then a current path between the lower vent member 24 and the upper vent member 26 is disconnected by the lower vent member 24 being deformed and breaking to push up the upper vent member 26 on the cap 27 side. If the inner pressure further rises, the upper vent member 26 breaks, and gas is discharged from an opening portion 27a of the cap 27.

In the configuration in which the sealing assembly 17 is crimped and fixed to the opening side end portion of the housing 16 via the gasket 28 as described above, the electrolytic solution is poured from the opening side end portion of the housing can 16 into the housing can 16 before the sealing assembly 17 is crimped and fixed to the opening side end portion of the housing can 16 when the battery is manufactured. However, if the electrolytic solution adhering to the inner surface of the opening side end portion of the housing can 16 remains after the electrolytic solution is poured, then the electrolytic solution adhering to the housing can 16 may cause corrosion of the housing can 16 or may cause seeping-out of the electrolytic solution from the housing can 16.

Also, in a configuration in which an electrolytic solution adhering to and remaining on an inner surface of an opening side end portion of a housing can is scraped off by a mountain-shaped protruding portion with a trapezoidal section of a gasket when the gasket is inserted into the housing can like the configuration described in Patent Literature 1 listed above, there is room for improvement in achieving both enhancement of an ability of removing the electrolytic solution from the inner surface of the opening side end portion of the housing can and enhancement of insertability of the gasket into the housing can. Thus, a protruding portion 54 projecting outward in the radial direction from an outer circumferential surface of a tubular main body portion 50 of the gasket 28 is provided in the present embodiment as will be described later. The protruding portion 54 is elastically folded outward in the axial direction such that a distal end 55 approaches the outer circumferential surface of the main body portion 50 in a state where the inner circumferential surface of the tubular portion of the housing can 16 is biased outward in the radial direction by the protruding portion 54.

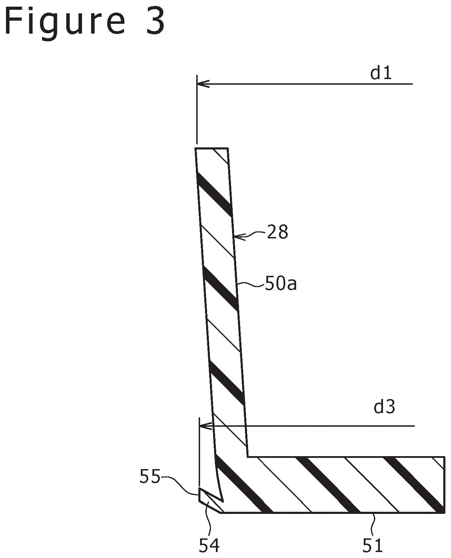

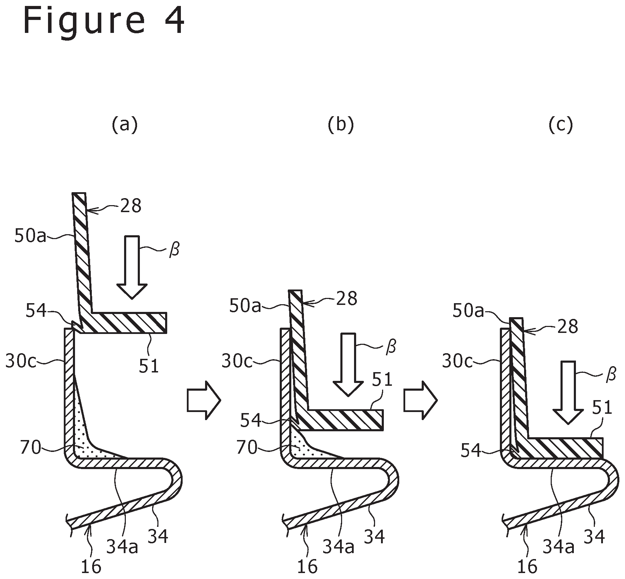

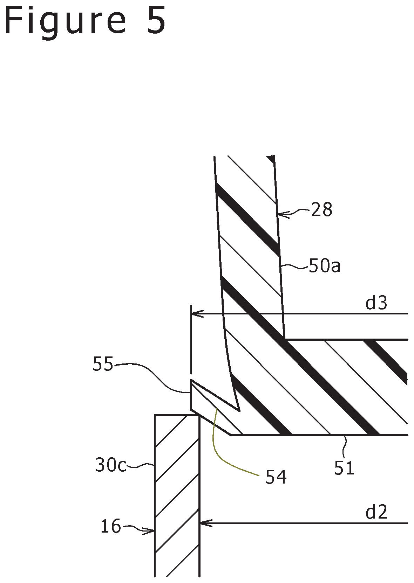

Hereinafter, the configuration of the gasket 28 will be described in detail using FIGS. 2 to 5. FIG. 3 is a sectional view of the gasket 28 before insertion into the housing can 16. FIG. 4 is a view illustrating a process of inserting the gasket 28 into the housing can 16. FIG. 5 is a main part sectional view illustrating an initial state when the gasket 28 is inserted into the housing can 16.

As illustrated in FIGS. 1 and 2, the gasket 28 is formed of a resin to have a substantially C sectional shape and a substantially annular planar shape. Specifically, the gasket 28 has the tubular main body portion 50 provided at an outer circumferential end, and an inner-side annular plate portion 51 that is coupled to an inner end of the main body portion 50 in the axial direction and extends inward in the radial direction, and an outer-side annular plate portion 52 that is coupled to an outer end of the main body portion 50 in the axial direction and extends inward in the radial direction. The main body portion 50 is formed in a substantially cylindrical shape. In FIG. 1, an inner end of the radially bent portion 38 of the housing can 16 in the radial direction substantially coincides with an inner end of the outer-side annular plate portion 52 in the radial direction. Note that in the outer-side annular plate portion 52, a sticking-out portion that sticks out inward in the radial direction relative to the inner end of the radially bent portion 38 in the radial direction may be formed.

It is possible to use an insulating resin with elasticity for the gasket 28. Examples of such a resin include polyethylene (PE), polypropylene (PP), polybutylene terephthalate (PBT), polyphenylene sulfide (PPS), perfluoroalkoxy alkane (PFA), and nylon.

In the present embodiment, the gasket 28 is provided with the protruding portion 54 projecting outward in the radial direction over the entire periphery from the outer circumferential surface of the tubular main body portion 50 as illustrated in FIG. 2. The projecting position of the protruding portion 54 is a part of the outer circumferential surface of the main body portion 50 located on the side further inward in the axial direction than the outer surface of the flange portion 17a of the sealing assembly 17 in the axial direction. In FIG. 2, illustration of the flange portion 17a is omitted.

The protruding portion 54 biases an inner circumferential surface of an upper side tubular portion 30a of the tubular portion 30 of the housing can 16 provided at a part adjacent to the upper side of the grooved portion 34 in the direction of the arrow α in FIG. 2, which is the outer side in the radial direction. In this state, the protruding portion 54 is elastically folded outward in the axial direction such that the distal end 55 approaches the outer circumferential surface of the main body portion 50. A force to elastically restore the distal end 55 outward in the radial direction is generated in the protruding portion 54 by the protruding portion 54 being elastically folded. In this manner, the protruding portion 54 biases the inner circumferential surface of the upper-side tubular portion 30a outward in the radial direction. Therefore, it is possible to achieve both enhancement of an ability of removing the electrolytic solution from the inner surface of the opening side end portion of the housing can 16 and enhancement of insertability of the gasket 28 into the housing can 16 as will be described later.

Furthermore, a clearance 60 (FIG. 2) is formed between the protruding portion 54 and the outer circumferential surface of the main body portion 50. The clearance 60 is an annular clearance that continues over the entire periphery between the protruding portion 54 and the outer circumferential surface of the main body portion 50 and has a substantially triangular section. In this manner, the protruding portion 54 is unlikely to be brought into a state where the protruding portion 54 is compressed by the outer circumferential surface of the main body portion 50 and the housing can 16 when the gasket 28 is inserted into the housing can 16, which will be described later, and it is thus possible to prevent the protruding portion 54 from being excessively compressed by the housing can 16. Therefore, it is possible to further improve insertability of the gasket 28 into the housing can 16.

In order to form the gasket 28 as described above in the assembled state of the gasket 28 with the housing can 16, the gasket 28 before the insertion into the housing can 16 is formed in an annular shape with a substantially L sectional shape having the tubular portion 50a and the inner-side annular plate portion 51 as illustrated in FIG. 3. The tubular portion 50a has both inner and outer circumferential surfaces inclined in a tapered shape such that the inner diameter and the outer diameter gradually increase outward in the axial direction. A maximum outer diameter d1 at an outer end of the tubular portion 50a in the axial direction is greater than an inner diameter d2 of an upper-side tubular portion 30c extending in the axial direction before the crimping of the housing can 16 illustrated in FIG. 5, which will be described later. Since the outer circumferential surface of the tubular portion 50a of the gasket 28 is inclined in a tapered shape in this manner, insertability of the gasket 28 into the upper-side tubular portion 30c before the crimping of the housing can 16 is improved.

Also, the protruding portion 54 projects from a bottom side end over the entire periphery of the outer circumferential surface of the tubular portion 50a of the gasket 28. The protruding portion 54 has a plate-like shape projecting outward in the radial direction to be inclined outward in the axial direction over the entire periphery from the bottom side end of the outer circumferential surface of the tubular portion 50a.

A part of the outer circumferential surface of the tubular portion 50a adjacent to the outer side of a root position of the protruding portion 54 in the axial direction has a curved shape with an outer diameter decreasing toward the bottom side end. The protruding portion 54 projects outward in the radial direction from a part of the tubular portion 50a with a minimum outer diameter.

Furthermore, an outer diameter d3 of the gasket 28 at a part including the distal end 55 of the protruding portion 54 before the assembling of the gasket 28 with the housing can 16 is greater than the inner diameter d2 (see FIG. 5, which will be described later) of the upper-side tubular portion 30c extending in the axial direction before the crimping of the housing can 16. In this manner, it is possible to achieve a state where the inner surface of the upper-side tubular portion 30a of the housing can 16 is biased outward in the radial direction by the protruding portion 54 in a state where the gasket 28 is assembled with the housing can 16 with the protruding portion 54 elastically folded to approach the outer circumferential surface of the main body portion 50 as illustrated in FIG. 2.

Next, a method of crimping and fixing the sealing assembly 17 to the housing can 16 via the gasket 28 will be described using FIGS. 4 and 5 with reference to FIGS. 1 to 3 as needed. First, the grooved portion 34 is formed by a part of the tubular portion of the housing can 16 before the crimping of the opening side end portion being dented inward in the radial direction by spinning processing, and the upper-side tubular portion 30c is formed on the side further upward than the grooved portion 34. Next, the electrolytic solution is poured into the housing can 16 from the upper side of the opening side end portion. At this time, an electrolytic solution 70 illustrated as a sandy area in FIG. 4(a) may remain on the inner surface near a corner portion between an annular plate portion 34a that forms the upper end of the grooved portion 34 and sticks out inward in the radial direction of the battery and the upper-side tubular portion 30c as illustrated in FIG. 4(a).

Then, the gasket 28 is inserted along with the sealing assembly into the upper-side tubular portion 30c of the housing can 16 from the upper side, which is the outer end side in the axial direction, as indicated by an arrow β in FIG. 4(a). In Fig. 4, illustration of the sealing assembly is omitted. At this time, since the diameter d3 of the part of the gasket 28 including the distal end 55 of the protruding portion 54 is greater than the inner diameter d2 of the upper-side tubular portion 30c of the housing can 16 as illustrated in FIG. 5 as described above, the protruding portion 54 is elastically folded such that the distal end 55 approaches the outer circumferential surface of the tubular portion 50a with the insertion of the gasket 28 into the housing can 16.

Then, the gasket 28 is inserted into the upper-side tubular portion 30c while the electrolytic solution 70 remaining near the corner portion between the annular plate portion 34a of the housing can 16 and the upper-side tubular portion 30c is scraped off downward by the protruding portion 54 as illustrated in FIG. 4(b). At this time, the outer circumferential surface of the upper end portion of the tubular portion 50a of the gasket 28 is also pressed against the inner surface of the upper-side tubular portion 30c of the housing can 16. Then, the gasket 28 is disposed on the upper surface of the annular plate portion 34a in a state where the protruding portion 54 biases the inner surface of the upper-side tubular portion 30c outward in the radial direction as illustrated in FIG. 4(c). Therefore, it is possible to scrape off the electrolytic solution 70 remaining near the above-described corner portion and adhering to the inner surface of the housing can 16 up to near the upper surface of the annular plate portion 34a. Furthermore, since the inner-side annular plate portion 51 of the gasket 28 is pressed against the upper surface of the annular plate portion 34a, it is possible to push out the electrolytic solution 70 inward in the radial direction from between the inner-side annular plate portion 51 and the annular plate portion 34a.

Thereafter, the opening side end portion of the housing can 16 and the upper part of the tubular portion 50a of the gasket 28 are crimped inward in the radial direction over the entire periphery. The outer circumferential portion of the flange portion 17a of the sealing assembly 17 is sandwiched between the radially bent portion 38 formed by the crimping and the upper surface of the grooved portion 34 via the gasket 28, and the sealing assembly 17 is fixed to the housing can 16.

According to the above-described sealed battery 10, it is possible to secure a force to bias the protruding portion 54 toward the inner circumferential surface of the opening side end portion of the housing can 16 and to improve insertability of the gasket 28 into the housing can 16 by elastically folding the protruding portion 54 outward in the axial direction when the gasket 28 is inserted into the housing can 16. It is thus possible to achieve both enhancement of an ability of removing the electrolytic solution from the inner surface of the opening side end portion of the housing can 16 and enhancement of insertability of the gasket 28 into the housing can 16.

Also, the projecting position of the protruding portion 54 is a part of the outer circumferential surface of the main body portion 50 located on the side further inward in the axial direction than the outer surface of the flange portion 17a of the sealing assembly 17 in the axial direction. Therefore, it is possible to prevent the protruding portion 54 from being compressed with the upper surface of the flange portion 17a by the radially bent portion 38 and to thereby prevent sealability of the sealing assembly 17 from being degraded.

Furthermore, the projecting position of the protruding portion 54 is the inner end of the outer circumferential surface of the main body portion 50 in the axial direction, and it is thus possible to scrape off more electrolytic solution adhering to the inner surface of the opening side end portion of the housing can 16 up to near the grooved portion 34.

Note that the projecting position of the protruding portion 54 may be provided within a range on the side further inward in the axial direction than the outer surface of the flange portion 17a of the sealing assembly 17 in the axial direction and on the side further outward in the axial direction than the inner end of the outer circumferential surface of the main body portion 50 in the axial direction, on the outer circumferential surface of the main body portion 50.

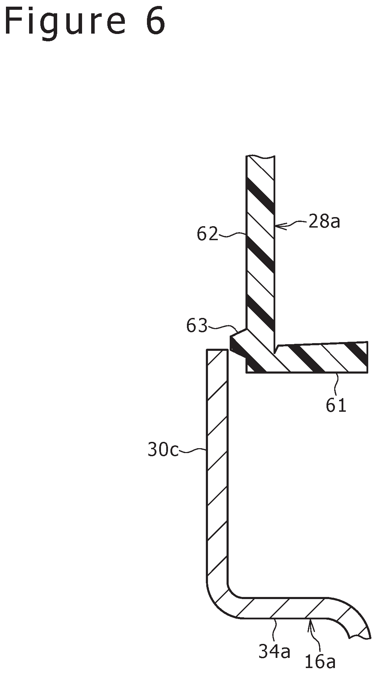

FIG. 6 is a view of a sealed battery in a comparative example corresponding to FIG. 4(a). A gasket 28a in the comparative example has a shape similar to that of the gasket described in Patent Literature 1. Specifically, the gasket 28a in the comparative example is formed in an annular shape with a substantially L sectional shape having a tubular portion 62 and an inner-side annular plate portion 61 projecting inward in the radial direction from a bottom side end of the tubular portion 62 in a state before insertion into the housing can 16a before crimping of the opening side end portion. Also, a protruding portion 63 with a trapezoidal sectional shape projects over the entire periphery from near the bottom of the outer circumferential surface of the tubular portion 62. The outer diameter of the gasket 28a including the distal end of the protruding portion 63 is equal to the inner diameter of an upper-side tubular portion 30c extending in the axial direction before crimping of the housing can 16a or is greater than the inner diameter.

FIG. 6 illustrates an initial state of a process of assembling the gasket 28 with the housing can 16a similarly to FIG. 4(a). At this time, the above-described annular gasket 28 with a substantially L sectional shape is inserted into the upper-side tubular portion 30c extending in the axial direction of the housing can 16. An electrolytic solution remaining on and adhering to the inner surface of the upper-side tubular portion 30c of the housing can 16 may be scraped off by the protruding portion 63 in this comparative example as well.

However, if the outer diameter of the protruding portion 63 is set to be much larger than the inner diameter of the upper-side tubular portion 30c of the housing can 16a in the gasket 28a in the comparative example in order to increase the amount of electrolytic solution to be scraped off, the protruding portion 63 requires to be compressed with a large force in the radial direction by the housing can 16a when the gasket 28a is inserted into the upper-side tubular portion 30c. This increases a resistance generated when the gasket 28 is inserted into the housing can 16a. Therefore, there is room for improvement in achieving both enhancement of an ability of removing the electrolytic solution from the inner surface of the opening side end portion of the housing can 16a and enhancement of insertability of the gasket 28a into the housing can 16a in the comparative example.

According to the present embodiment, the protruding portion 54 for biasing the inner surface of the housing can 16 is formed in the state where the gasket 28 is folded, and it is thus possible to prevent the disadvantage described above and to achieve both enhancement of an ability of removing the electrolytic solution from the inner surface of the opening side end portion of the housing can 16 and enhancement of insertability of the gasket 28 into the housing can 16.

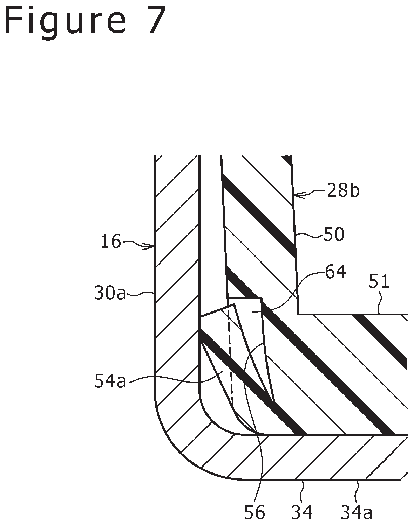

FIG. 7 is a view of another example of the embodiment corresponding to FIG. 2. In a configuration of this example, an annular recessed portion 56 that has a substantially rectangular sectional shape and continues over the entire periphery is formed in the main body portion 50 of the gasket 28b, on the outer circumferential surface of the inner end portion in the radial direction on the bottom side. Also, a protruding portion 54a projects outward in the radial direction to be inclined outward in the axial direction over the entire periphery from the bottom side end of the outer circumferential surface of the main body portion 50 such that the protruding portion 54a is adjacent to the lower end, which is an inner end in the axial direction, of the inner surface of the recessed portion 56.

In this state, the protruding portion 54a is elastically folded to approach the side further outward in the axial direction than a root end of the protruding portion 54a on the outer circumferential surface of the main body portion 50, and also biases the inner surface of the upper-side tubular portion 30a of the housing can 16 outward in the radial direction. In this manner, the recessed portion 56 is formed at a part of the outer circumferential surface of the main body portion 50 facing the protruding portion 54a in the radial direction. Moreover, a part of the protruding portion 54a enters the recessed portion 56, and furthermore, a clearance 64 is formed between the protruding portion 54 and the outer circumferential surface of the main body portion, which is an inner surface of the recessed portion 56, in the radial direction.

According to the configuration of another example described above, it becomes easy to form the clearance 64 between the protruding portion 54 and the inner surface of the recessed portion 56 in the radial direction even in a case where the protruding portion 54 is greatly bent in the radial direction toward the outer circumferential surface of the main body portion 50 in the assembled state of the gasket 28 with the housing can 16 by increasing the amount of projection of the protruding portion 54 from the outer circumferential surface of the main body portion 50. It is thus possible to further improve the ability of removing the electrolytic solution without degrading insertability of the gasket 28 into the housing can 16. In this example, the other configurations and effects are similar to those of the configuration in FIGS. 1 to 5.

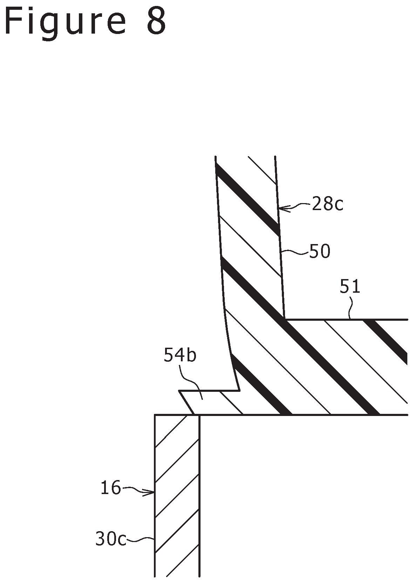

FIG. 8 is a view of another example of the embodiment corresponding to FIG. 5. In the configuration of this example, a protruding portion 54b projecting along the radial direction outward in the radial direction projects over the entire periphery from the outer circumferential surface of the inner end in the axial direction, which is the bottom side end, of the main body portion 50 in an assembled state of a gasket 28c with the housing can 16.

The outer diameter of the gasket 28c at a part including the distal end of the protruding portion 54b is greater than the inner diameter of the upper-side tubular portion 30c before crimping of the housing can 16. Even in a case where the gasket 28c has such a shape in a state before the assembling with the housing can 16, the protruding portion 54 is folded to approach the outer circumferential surface of the main body portion 50 with insertion of the gasket 28c into the opening side end portion of the housing can 16, and it is possible to bias the inner surface of the upper-side tubular portion 30c of the housing can 16 outward in the radial direction in that state. In this example, the other configurations and effects are similar to those of the configuration in FIGS. 1 to 5.

The present disclosure will be further described by the following embodiments.
Configuration 1: A sealed battery, comprising:
   an electrode assembly in which a positive electrode and a negative electrode are wound via separators;
   a housing can with a bottomed cylindrical shape that accommodates the electrode assembly and an electrolytic solution;
   a sealing assembly that blocks an opening of the housing can; and
   an annular gasket that is interposed between the housing can and the sealing assembly, wherein
   the sealing assembly is crimped and fixed to an opening side end portion of the housing can via the gasket,
   the gasket includes a tubular main body portion and a protruding portion that projects outward in a radial direction over an entire periphery from an outer circumferential surface of the main body portion, and
   the protruding portion is elastically folded outward in an axial direction such that a distal end approaches the outer circumferential surface of the main body portion in a state where the protruding portion biases an inner circumferential surface of a tubular portion provided at the opening side end portion of the housing can outward in the radial direction.
Configuration 2: The sealed battery according to Configuration 1, wherein a clearance is formed between the protruding portion and the outer circumferential surface of the main body portion in the radial direction.
Configuration 3: The sealed battery according to Configuration 1 or 2, wherein
   an annular recessed portion is formed at a part of the outer circumferential surface of the main body portion facing the protruding portion in the radial direction, and
   at least a part of the protruding portion enters the recessed portion.
Configuration 4: The sealed battery according to any one of Configurations 1 to 3, wherein
   the sealing assembly has an annular flange portion that is provided on an outer peripheral side, and
   the protruding portion projects from a part of the outer circumferential surface of the main body portion located on a side further inward in the axial direction than an outer surface of the flange portion in the axial direction.
Configuration 5: The sealed battery according to Configuration 4, wherein the protruding portion projects from an inner end of the outer circumferential surface of the main body portion in the axial direction.

### REFERENCE SIGNS LIST

10 Sealed battery, 11 Positive electrode, 12 Negative electrode, 13 Separator, 14 Electrode assembly, 16, 16a Housing can, 17 Sealing assembly, 17a Flange portion, 18 Upper insulating plate, 19 Lower insulating plate, 20 Positive electrode tab, 21 Negative electrode tab, 23 Internal terminal board, 24 Lower vent member, 25 Insulating member, 26 Upper vent member, 27 Cap, 27a Opening portion, 27b Flange, 27c Tubular portion, 28, 28a, 28b, 28c Gasket, 30 Tubular portion, 30a, 30c Upper-side tubular portion, 31 Bottom, 34 Grooved portion, 38 Radially bent portion, 50 Main body portion, 50a Tubular portion, 51 Inner-side annular plate portion, 52 Outer-side annular plate portion, 54, 54a, 54b Protruding portion, 55 Distal end, 56 Recessed portion, 61 Inner-side annular plate portion, 62 Tubular portion, 63 Protruding portion, 64 Clearance, 70 Electrolytic solution

## Claims

1. A sealed battery, comprising:
an electrode assembly in which a positive electrode and a negative electrode are wound via separators;
a housing can with a bottomed cylindrical shape that accommodates the electrode assembly and an electrolytic solution;
a sealing assembly that blocks an opening of the housing can; and
an annular gasket that is interposed between the housing can and the sealing assembly, wherein
the sealing assembly is crimped and fixed to an opening side end portion of the housing can via the gasket,
the gasket includes a tubular main body portion and a protruding portion that projects outward in a radial direction over an entire periphery from an outer circumferential surface of the main body portion, and
the protruding portion is elastically folded outward in an axial direction such that a distal end approaches the outer circumferential surface of the main body portion in a state where the protruding portion biases an inner circumferential surface of a tubular portion provided at the opening side end portion of the housing can outward in the radial direction.

2. The sealed battery according to claim 1, wherein a clearance is formed between the protruding portion and the outer circumferential surface of the main body portion in the radial direction.

3. The sealed battery according to claim 1, wherein
an annular recessed portion is formed at a part of the outer circumferential surface of the main body portion facing the protruding portion in the radial direction, and
at least a part of the protruding portion enters the recessed portion.

4. The sealed battery according to claim 1, wherein
the sealing assembly has an annular flange portion that is provided on an outer peripheral side, and
the protruding portion projects from a part of the outer circumferential surface of the main body portion located on a side further inward in the axial direction than an outer surface of the flange portion in the axial direction.

5. The sealed battery according to claim 4, wherein the protruding portion projects from an inner end of the outer circumferential surface of the main body portion in the axial direction.
